# EUROPEAN PATENT APPLICATION

(11) **EP 4 333 288 A1**
(43) Date of publication of application: **06.03.2024**
(21) Application number: 23809073.2
(22) Date of filing: 29.06.2023
(51) Int. Cl.: H02P 1/16, H02H 9/04

(54) **SOLID-STATE MOTOR STARTER**

(30) Priority: 30.06.2022 CN 202210768457
(71) Applicant: Schneider Electric Industries SAS, 92500 Rueil-Malmaison (FR)
(72) Inventor: WU, Zuoren, Shanghai 201203 (CN); CHEN, Jiamin, Shanghai 201203 (CN)
(74) Representative: Manitz Finsterwald Patent- und Rechtsanwaltspartnerschaft mbB
(86) International application number: PCT/CN2023/103899
(87) International publication number: WO 2024/002248

(57) **Abstract**

The present disclosure relates a solid-state motor starter which includes three electronic switching modules, the input of each electronic switching module is configured to connect to one phase of the AC power supply and the output of each electronic switching module is configured to connect to one phase of the stator winding of the motor; the solid-state motor starter includes an energy absorbing circuit, the energy absorbing circuit includes: a transient diode array, the transient diode array includes at least one transient diode branch, each transient diode branch includes at least one transient diode connected in series in the same direction, the transient diode branches are connected in parallel in the same direction, the transient diode array has a cathode connection end and an anode connection end, and a first three-phase bridge rectifier circuit and a second three-phase bridge rectifier circuit, which are composed of rectifier diodes, respectively; wherein the input of each electronic switching module is connected to the midpoint of one of the bridge arms of the first three-phase bridge rectifier circuit, respectively, and the output of each electronic switching module is connected to the midpoint of one of the bridge arms of the second three-phase bridge rectifier circuit, respectively, and the positive poles of the first and second three-phase bridge rectifier circuit are connected to the cathode connection end of the transient diode array, respectively, and the negative poles of the first and second three-phase bridge rectifier circuit are connected to the anode connection end of the transient diode array.

## Description

### TECHNICAL FIELD

The present disclosure relates to a solid-state motor starter.

### BACKGROUND

A Solid-state motor starter uses electronic switches, such as thyristors, transistors, MOSFETs and IGBTs, and connect them between the power supply and the stator of the motor. When a solid-state motor starter is used to start the motor, the voltage output through the electronic switch gradually increases and the motor gradually accelerates until the electronic switch is fully switched on or off and the motor operates at the rated voltage to achieve smooth starting, reduce the starting current and avoid overcurrent tripping of the starter.

In addition, another core function of solid-state motor starter is short circuit protection. In the event of a short circuit fault, the electronic switch needs to be switched off quickly to avoid damage to the motor or wiring from the short circuit current. Detecting the current and switching off the electronic switch in microseconds is not much of a challenge for a solid-state motor starter. However, if the electronic switch is simply switched off without providing an energy absorbing circuit, the inductive electromotive force caused by the inductance of the load or electrical line will charge the junction capacitance of the electronic switch, and once the inductive energy is too high, the voltage will exceed the rated voltage of the electronic switch and will break it down.

### SUMMARY

Accordingly, the present disclosure proposes a solid-state motor starter that is capable of protecting an electronic switch from damage by overvoltage, when the electronic switch in the solid-state motor starter switches off due to a short-circuit fault. In addition, the solid-state motor starter can be implemented in a low-cost manner.

Embodiments of the present disclosure provide a solid-state motor starter, the solid-state motor starter includes three electronic switching modules, the input of each electronic switching module is configured to connect to one phase of the AC power supply and the output of each electronic switching module is configured to connect to one phase of the stator winding of the motor; the solid-state motor starter includes an energy absorbing circuit, the energy absorbing circuit includes: a transient diode array, the transient diode array includes at least one transient diode branch, each transient diode branch includes at least one transient diode connected in series in the same direction, the transient diode branches are connected in parallel in the same direction, the transient diode array has a cathode connection end and an anode connection end, and a first three-phase bridge rectifier circuit and a second three-phase bridge rectifier circuit, which are composed of rectifier diodes, respectively; wherein the input of each electronic switching module is connected to the midpoint of one of the bridge arms of the first three-phase bridge rectifier circuit, respectively, and the output of each electronic switching module is connected to the midpoint of one of the bridge arms of the second three-phase bridge rectifier circuit, respectively, and the positive poles of the first and second three-phase bridge rectifier circuit are connected to the cathode connection end of the transient diode array, respectively, and the negative poles of the first and second three-phase bridge rectifier circuit are connected to the anode connection end of the transient diode array.

According to an embodiment of the present disclosure, wherein the transient diode branches each have the same number of transient diodes.

According to an embodiment of the present disclosure, wherein the energy absorbing circuit further includes a discharge resistor array and a switching unit for controlling the on and off of the discharge resistor array, the discharge resistor array being connected in series with the switching unit; a series circuit consisting of the discharge resistor array and the switching unit connected in parallel with the transient diode array; wherein the switching unit switches on if the voltage applied to the series circuit exceeds a predetermined threshold voltage in the switching unit.

According to an embodiment of the present disclosure, wherein the switching unit includes: an IGBT, a first resistor and a second resistor, and a voltage limiting element, which includes at least one transient diode connected in series in the same direction, the voltage limiting element has a cathode connection end and an anode connection end; wherein the collector of the IGBT is connected to the first end of the discharge resistor array, the second end of the discharge resistor array is connected to the cathode connection end of the transient diode array, the emitter of the IGBT is connected to the anode connection end of the transient diode array, and the cathode connection end of the voltage limiting element is connected to the cathode connection end of the transient diode array, the anode connection end of the voltage limiting element is connected to the first end of the first resistor, the second end of the first resistor is connected to the first end of the second resistor, the second end of the second resistor is connected to the anode connection end of the transient diode array, and the second end of the first resistor is connected to the gate of the IGBT.

According to an embodiment of the present disclosure, wherein the reverse conducting threshold of the voltage limiting element is set to be less than the reverse conducting threshold of the transient diode array.

According to an embodiment of the present disclosure, wherein the energy absorbing circuit further includes a transient diode for protection, the cathode of the transient diode for protection is connected to the gate of the IGBT, and the anode of the protection transient diode is connected to the emitter of the IGBT.

According to an embodiment of the present disclosure, wherein each electronic switching module includes a first MOSFET and a second MOSFET, the sources of the first and second MOSFETs are connected to each other, wherein the drain of the first MOSFET is connected to the input of the electronic switching module, and the drain of the second MOSFET is connected to the output of the electronic switching module.

According to an embodiment of the present disclosure, each electronic switching module includes a first MOSFET and a second MOSFET, the drains of the first and second MOSFETs are connected to each other, wherein the source of the first MOSFET is connected to the input of the electronic switching module, and the source of the second MOSFET is connected to the output of the electronic switching module.

In the solid-state motor starter according to the present disclosure, the energy absorbing circuit employs a three-phase bridge rectifier circuit on the AC power side and on the motor side, respectively. When the inductive energy of the load or electrical line induces a large inductive electromotive force on the AC power side or on the motor side at the electronic switch of the solid-state motor starter, the large inductive electromotive force can be applied to the transient diode array through the three-phase bridge rectifier circuit on the AC power side or on the motor side, thereby performing energy absorption through the transient diode array. This allows the three electronic switching modules of the solid-state motor starter to share a single transient diode array. The use of at least two transient diode arrays can be reduced compared to connecting at least one transient diode array in parallel to each electronic switching module. Since transient diodes are very expensive, the solid-state motor starter can be constructed and produced at a lower cost.

### BRIEF DESCRIPTION OF DRAWINGS

In order to more clearly illustrate the technical solutions of the embodiments of the present disclosure, the following is a brief description of the accompanying drawings that need to be used in the description of the embodiments. It will be apparent that the accompanying drawings in the following description are only some exemplary embodiments of the present disclosure, and other accompanying drawings may be obtained from these drawings without creative labor to a person of ordinary skill in the art.
Fig. 1 illustrates a schematic block diagram of a solid-state motor starter,
Fig. 2 illustrates a schematic circuit structure of a solid-state motor starter having an energy absorbing circuit, according to embodiments of the present disclosure
Fig. 3 illustrates a waveform diagram of the switch-off process of a solid-state motor starter according to an embodiment of the present disclosure, the
Fig. 4 illustrates a schematic circuit structure of an energy absorbing circuit according to embodiments of the present disclosure, the
Fig. 5 illustrates a waveform diagram of the switch-off process of a solid-state motor starter according to another embodiment of the present disclosure.

### DETAILED DESCRIPTION

In order to make the objects, technical solutions and advantages of the present disclosure more apparent, exemplary embodiments according to the present disclosure will be described in detail below with reference to the accompanying drawings. Obviously, the described embodiments are only a portion of the embodiments of the present disclosure and not all of the embodiments of the present disclosure, and it should be understood that the present disclosure is not limited by the exemplary embodiments described herein.

In this specification and the accompanying drawings, substantially the same or similar steps and elements are indicated by the same or similar accompanying marks, and repetitive descriptions of such steps and elements will be omitted. Also, in the description of this disclosure, the terms "first", "second", etc. are used only to distinguish the description and are not to be construed as indicating or implying relative importance or ranking.

In this specification and the accompanying drawings, elements are described in singular or plural form according to the embodiments. However, the singular and plural forms are appropriately selected for use in the presented embodiments merely for ease of interpretation and are not intended to limit the present disclosure thereto. Thus, the singular form may comprise the plural form, and the plural form may also comprise the singular form, unless the context clearly indicates otherwise. In embodiments of the present disclosure, unless otherwise expressly stated, "connected" does not mean that there must be a "direct connection" or "direct contact", but only that there is an electrical connection.

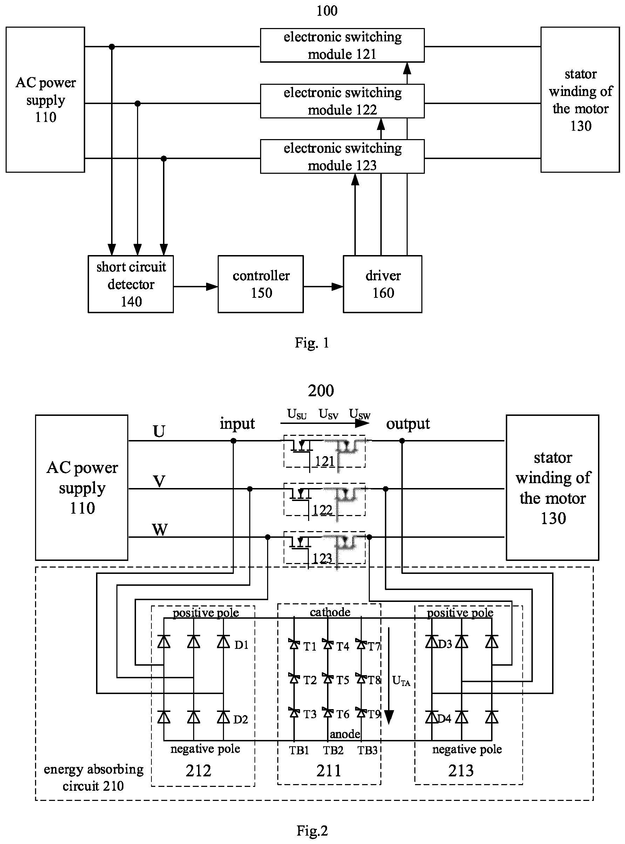

Fig. 1 illustrates a schematic block diagram of a solid-state motor starter 100. The solid-state motor starter 100 includes three electronic switching modules 121, 122, and 123. These electronic switching modules include power semiconductor switches, such as MOSFETs (metal-oxide-semiconductor field-effect transistors), IGBTs (insulated gate bipolar transistors), GTOs (gate-switch-off thyristors), and IGCTs (integrated gate-commutated thyristors). For example, each electronic switching module 121, 122 and 123 may include a first MOSFET and a second MOSFET, respectively. The sources of the first and second MOSFETs are connected to each other. The drain of the first MOSFET is connected to the input of the electronic switching module, and the drain of the second MOSFET is connected to the output of the electronic switching module. Alternatively, the drains of the first and second MOSFETs are connected to each other and the source of the first MOSFET is connected to the input of the electronic switching module and the source of the second MOSFET is connected to the output of the electronic switching module.

The inputs of each electronic switching module 121, 122 and 123 are configured to connect to one phase of the AC power supply 110, and the outputs of each electronic switching module 121, 122 and 123 are configured to connect to one phase of the stator winding 130 of the motor.

One of the functions of the semiconductor switch-based solid-state motor starter 100 is short-circuit protection. To implement the short circuit protection function, the short circuit detector 140 detects the current in each phase and feeds the detected current signal to the controller 150, the controller 150 may compare the detected current signal with a predetermined threshold to determine whether a short circuit fault exists. If a short circuit fault exists, the controller 150 sends a drive signal to the driver 160, the driver 160 causing the electronic switching modules 121, 122 and 123 to switch off. For electronic switching modules 121, 122 and 123, which consist of semiconductor switches, switching down in microseconds is not much of a challenge. However, if the electronic switching modules 121, 122 and 123 are simply switched off without providing an energy absorbing circuit, the inductive energy of the load or electrical line will cause an extremely large inductive electromotive force, which will charge the junction capacitance of the electronic switching modules 121, 122 and 123, thereby potentially knocking out the electronic switching modules 121, 122 and 123.

Fig. 2 illustrates a schematic circuit structure of a solid-state motor starter having an energy absorbing circuit according to an embodiment of the present disclosure. The solid-state motor starter 200 according to embodiments of the present disclosure includes an energy absorbing circuit 210. The energy absorbing circuit 210 includes: a transient diode array 211 comprising at least one transient diode branch. Each transient diode branch includes at least one transient diode connected in series in the same direction. The transient diode branches are connected in parallel in the same direction. The transient diode array has a cathode connection end and an anode connection end. Exemplarily illustrated in Fig. 2 are three transient diode branches TB1, TB2 and TB3, each transient diode branch TB1, TB2 and TB3 arranged with three transient diodes T1, T2, T3; T4, T5, T6; T7, T8, T9. The transient diodes on each transient diode branch TB1, TB2 and TB3 are connected in series in the same direction. Taking transient diode branch TB1 as an example, the anode of transient diode T1 is connected to the cathode of transient diode T2, and the anode of transient diode T2 is connected to the cathode of transient diode T3. The transient diode branches TB2 and TB3 are also connected in series in the same manner in the same direction. The transient diode branches TB1, TB2, and TB3 are connected in parallel in the same direction, i.e., the cathodes of transient diodes T1, T4, and T7 are connected to each other, and the anodes of transient diodes T3, T6, and T9 are connected to each other, whereby the cathodes of transient diodes T1, T4, and T7 are the cathode connection ends of transient diode array 211, and the anodes of transient diodes T3, T6, and T9 are the anode connection ends of transient diode The anodes of transient diodes T3, T6, and T9 are the anode connection ends of transient diode array 211.

For the electronic switching modules 121, 122 and 123 to share the transient diode matrix 211, each electronic switching module 121, 122 and 123 is connected to the transient diode matrix 211 through four diodes D1, D2, D3, D4, wherein the input of each electronic switching module 121, 122 and 123 is connected to the anode of the first rectifier diode D1, the cathode of the first rectifier diode D1 is connected to the cathode connection end of the transient diode array 211, the input of each electronic switching module 121, 122, and 123 is connected to the cathode of the second rectifier diode D2, the anode of the second rectifier diode D2 is connected to the anode connection end of the transient diode array 211, and the output of each electronic switching module 121, 122, and 123 is connected to the anode of the third diode D3, the cathode of the third diode D3 is connected to the cathode connection end of the transient diode array 211, and the output of each electronic switching module 121, 122, and 123 is connected to the cathode of the fourth diode D4, the anode of the fourth diode D4 is connected to the anode connection end of the transient diode array 211.

In other words, the energy absorbing circuit 210 further includes: a first three-phase bridge rectifier circuit 212 comprising three first rectifier diodes D1 and three second rectifier diodes D2 in three phases, and a second three-phase bridge rectifier circuit 213 comprising three third diodes D3 and three fourth diodes D4 in three phases. The cathodes of each first rectifier diode D1 are connected to each other to form the positive pole of the first three-phase bridge rectifier circuit 212, the anodes of each second rectifier diode D2 are connected to each other to form the negative pole of the first three-phase bridge rectifier circuit 212, and the cathodes of each third diode D3 are connected to each other to form the positive pole of the second three-phase bridge rectifier circuit 213, and the anodes of each fourth diode D4 are connected to each other to form the negative pole of the second three-phase bridge rectifier circuit 213. The inputs of each electronic switching module 121, 122 and 123 are connected to the midpoint of one of the bridge arms of the first three-phase bridge rectifier circuit 212, and the outputs of each electronic switching module 121, 122 and 123 are connected to the midpoint of one of the bridge arms of the second three-phase bridge rectifier circuit 213. The positive poles of the first three-phase bridge rectifier circuit 212 and the second three-phase bridge rectifier circuit 213 are connected to the cathode connection end of the transient diode array 211, respectively, and the negative poles of the first three-phase bridge rectifier circuit 212 and the second three-phase bridge rectifier circuit 213 are connected to the anode connection end of the transient diode array 211, respectively.

According to the energy absorbing circuit 210 of this embodiment, the voltage applied to the transient diode array 211 is either the line voltage rectified by the first three-phase bridge rectifier circuit 212 on the power supply side or the line voltage rectified by the second three-phase bridge rectifier circuit 213 on the motor side. Therefore, the cathode connection end of the transient diode array 211 is always at high potential and the anode connection end of the transient diode array 211 is always at low potential, i.e., the voltage U_{TA} on the transient diode array 211 is always positive. When the voltage U_{TA} on the transient diode array 211 exceeds the reverse conducting threshold, the transient diode array 211 turns on in reverse, i.e., current flows from the cathode connection end to the anode connection end. As a result, when the electronic switching modules 121, 122 and 123 are switched off due to a short circuit fault, the overvoltage on the electronic switching modules 121, 122 and 123 can be released by the transient diode array 211, thus ensuring that the electronic switching modules 121, 122 and 123 are not damaged.

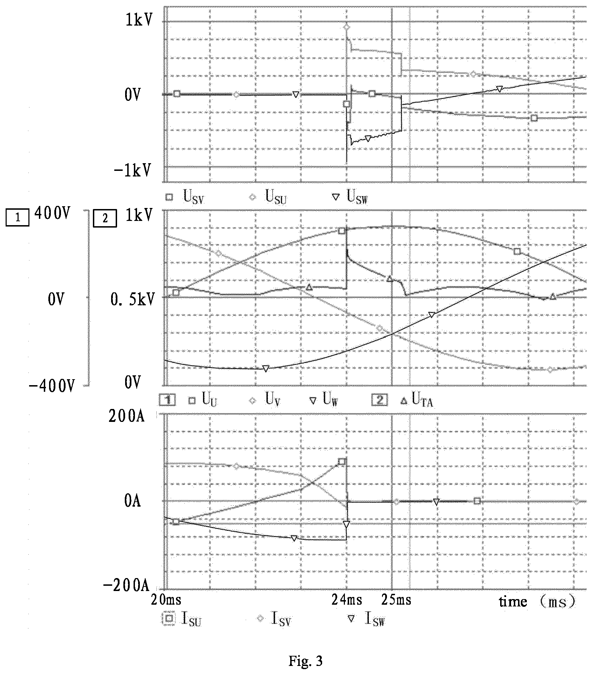

Fig. 3 illustrates a waveform diagram of the switch-off process of a solid-state motor starter according to an embodiment of the present disclosure. In Fig. 3, the abscissa is the time (ms) at which the solid-state motor starter detects a short circuit fault and switches off the electronic switching modules 121, 122, and 123 at 24 ms. The diagram located at the top in Fig. 3 illustrates the voltages Usu, Usv, and Usw applied to the electronic switching modules 121, 122, and 123. The diagram located in the middle in Fig. 3 illustrates the phase voltages Uu, Uv, and Uw of the three phases U, V, and W, and the course of the voltage U_{TA} on the transient diode array 211, after the first three-phase bridge rectifier circuit 212, and the voltage U_{TA} applied to the transient diode array 211 is the rectified the line voltages Uu-w, Uu-v, Uw_v ... between the three phases U, V and W, where the amplitudes of the phase voltages Uu, Uv, Uw are indicated by the first vertical axis (-400V to +400) and the voltages U_{TA} are indicated by the second vertical axis (0V to 1kV). The diagram located below in Fig. 3 illustrates the course of the currents Isu, Isv, Isw flowing through the electronic switching modules 121, 122 and 123.

As can be seen in Fig. 3, the phase voltages Uu, Uv, and Uw of the three phases U, V, and W have an amplitude of approximately 320 V. When the electronic switching modules 121, 122, and 123 remain on, the currents Isu, Isv, and Isw flow through the electronic switching modules 121, 122, and 123 and the voltages Usu, Usv, and Usw thereon are zero, and at this time, the voltage U_{TA} on the transient diode array 211 does not exceed the transient diode array 211 and the transient diode array 211 does not conduct. At 24 ms, the electronic switching modules 121, 122, and 123 switch off and the junction capacitors in the electronic switching modules charge under the inductive energy in the electrical line, so the voltages Usu, Usv, and Usw on them increase rapidly. Accordingly, the voltage U_{TA} on the transient diode array 211 also increases rapidly and exceeds the reverse conducting threshold of the transient diode array 211, and the transient diode array 211 switches on and performs energy dissipation or energy absorption. After energy absorption lasting about 1 ms, the voltages Usu, Usv, Usw on the electronic switching modules 121, 122 and 123 fall back to the magnitude of the phase voltages Uu, Uv, Uw and the voltage U_{TA} on the transient diode array 211 falls back to the magnitude of the line voltage between the rectified three-phase U, V and W. This avoids damage to the electronic switching modules 121, 122 and 123 from overvoltage on them.

In embodiments according to the present disclosure, the transient diode branches TB1, TB2, and TB3 each have the same number of transient diodes. In case the individual transient diodes are the same, the transient diode branches TB1, TB2 and TB3 must have the same number of transient diodes in order to ensure that each transient diode branch TB1, TB2 and TB3 has the same reverse conducting threshold. It is also possible that each transient diode branch TB1, TB2 and TB3 can have different numbers of transient diodes in case different size transient diodes are used, but it must be ensured that each transient diode branch TB1, TB2 and TB3 has the same reverse conducting threshold.

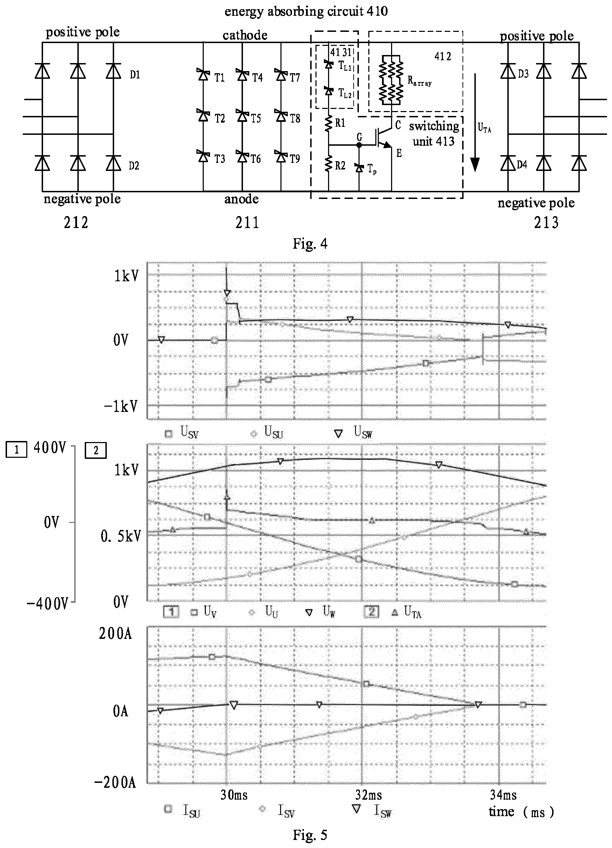

Fig. 4 illustrates a schematic circuit structure of an energy absorbing circuit 410 according to another embodiment of the present disclosure. The energy absorbing circuit 410 illustrated in Fig. 4 is connected to phase lines or electronic switching modules 121, 122, and 123 in the same manner as shown in Fig. 2. The energy absorbing circuit 410 illustrated in Fig. 4 differs from the energy absorbing circuit 210 in Fig. 2 only in that the energy absorbing circuit 410 additionally includes a discharge resistor array 412 and a switching unit 413 for controlling the on/off of the discharge resistor array 412, the discharge resistor array 412 being connected in series with the switching unit 413. The series circuit consisting of the discharge resistor array 412 and the switching unit 413 is connected in parallel with the transient diode array 211; wherein the switching unit 413 is switched on if a voltage U_{TA} applied to the series circuit exceeds a predetermined threshold voltage in the switching unit 413.

In the embodiment shown in Fig. 4, the switching unit 413 includes: an IGBT, a first resistor R1 and a second resistor R2, and a voltage limiting element 4131. The voltage limiting element 4131 includes at least one transient diode T_{L1}, T_{L2} connected in series in the same direction. In Fig. 4, the voltage limiting element 4131 comprising two transient diodes T_{L1}, T_{L2} is schematically shown, wherein the anode of the transient diode T_{L1} is connected to the cathode of the transient diode T_{L1}, so that the cathode of the transient diode T_{L1} is the cathode connection end of the voltage limiting element 4131, and the anode of the transient diode T_{L2} is the anode connection end of the voltage limiting element 4131. The collector C of the IGBT is connected to a first end (lower end) of the discharge resistor array 412, the second end (upper end) of the discharge resistor array 412 is connected to a cathode connection end of the transient diode array 211, the emitter E of the IGBT is connected to an anode connection end of the transient diode array 211, and the cathode connection end of the voltage limiting element 4131 is connected to a cathode connection end of the cathode connection end of the transient diode array 211, the anode connection end of the voltage limiting element 4131 is connected to the first end (upper end) of the first resistor R1, the second end (lower end) of the first resistor R1 is connected to the first end (upper end) of the second resistor R2, the second end (lower end) of the second resistor R2 is connected to the anode connection end of the transient diode array 211, and the second end (lower end) of the first resistor R1 is connected to the gate G of the IGBT.

If an overvoltage occurs and the two transient diodes T_{L1}, T_{L2} in the voltage limiting element 4131 are switched on, the partial voltage on the second resistor R2 is applied between the gate G and the emitter E of the IGBT, and the IGBT is thus on, so that the discharge resistor array 412 is connected in parallel with the transient diode array 211.

In the event that the three electronic switching modules 121, 122 and 123 are switched off due to a short circuit fault, the energy absorbing circuit 410 according to this embodiment can perform energy absorption through the discharge resistor array 412 in addition to the transient diode array 211. For example, when the voltage U_{TA} applied to the transient diode array 211 exceeds the reverse conducting threshold and switches on, the switching unit 413, i.e., the IGBT shown in Fig. 4, may also conduct at the same time, causing the discharge resistor array 412 to also conduct energy absorption at the same time. In the embodiment shown in Fig. 4, the voltage limiting element 4131 comprising the transient diodes T_{L1} and T_{L1} in series is designed for this purpose to have the same reverse conducting threshold as the reverse conducting threshold of the transient diode array 211.

Fig. 5 illustrates a waveform diagram of the switch-off process of a solid-state motor starter according to another embodiment of the present disclosure. In Fig. 5, the abscissa is time (ms) at which the solid-state motor starter detects a short circuit fault and switches off the electronic switching modules 121, 122, and 123 at 30 ms. The diagram located at the top in Fig. 5 illustrates the voltages Usu, Usv, and Usw applied to the electronic switching modules 121, 122, and 123. The diagram located in the middle in Fig. 5 illustrates the phase voltages Uu, Uv, and Uw of the three phases U, V, and W, and the course of the voltage U_{TA} on the transient diode array 211, after the first three-phase bridge rectifier circuit 212, and the voltage U_{TA} applied to the transient diode array 211 is the rectified the line voltages Uu-w, Uu-v, U_{W-V} ... between the three phases U, V and W, where the amplitudes of the phase voltages Uu, Uv, Uw are indicated by the first vertical axis (-400V to +400) and the voltages U_{TA} are indicated by the second vertical axis (0V to 1kV). The diagram located below in Fig. 5 illustrates the course of the currents ISU, ISV, ISW flowing through the electronic switching modules 121, 122 and 123.

As can be seen in Fig. 5, at 30ms, the electronic switching modules 121, 122 and 123 switch off and the junction capacitors in the electronic switching modules is charging under the inductive energy in the electrical line, so that the corresponding voltages Usu, Usv, Usw increase rapidly. Accordingly, the voltage U_{TA} on the transient diode array 211 also increases rapidly and exceeds the reverse conducting threshold of the transient diode array 211, and the transient diode array 211 switches on, and in addition the voltage U_{TA} also exceeds the reverse conducting threshold of the voltage limiting element 4131, so that the IGBT in the switching unit 413 also switches on and therefore the resistor array 412 is connected in parallel with the transient diode array 211. Thus, in this embodiment, the transient diode array 211 and the resistor array 412 jointly perform energy consumption or energy absorption. After about 4 ms, the voltages Usu, Usv, Usw on the electronic switching modules 121, 122 and 123 fall back to the magnitude of the phase voltages Uu, Uv, Uw and the voltage U_{TA} on the transient diode array 211 falls back to the magnitude of the rectified three-phase line voltage between U, V and W. Unlike the embodiment shown in Fig. 3, in Fig. 5, after the transient diode array 211 switches on, Usu, Usv, Usw on the electronic switching modules 121, 122, and 123 rapidly decreases, and after about 0.5 ms, the resistor array 412 is connected and performs energy absorption together with the transient diode array 211, and from this point on the electronic switching modules 121, 122, and 123 Usu, Usv, Usw decreases relatively slowly until at about 34ms the energy is absorbed ends and the voltages Usu, Usv, Usw equal the phase voltage.

According to embodiments of the present disclosure, it is also possible to set the reverse conducting threshold of the voltage limiting element 4131 to be smaller than the reverse conducting threshold of the transient diode array 211. In the case where their reverse conducting thresholds are the same, when an overvoltage exceeding the reverse conducting threshold occurs, the conducting action of the switching unit 413 is slower than the reverse conducting action of the transient diode array 211, i.e., the conducting action of the switching unit 413 lags behind the reverse conducting action of the diode array 211. Thus by designing the reverse conducting threshold of the voltage limiting element 4131 smaller, the switching unit 413 as well as the discharge resistor array 412 can be made to switch on earlier, thus sharing the short-circuit current for the transient diode array 211 earlier.

According to an embodiment of the present disclosure, the energy absorbing circuit 410 then further includes a transient diode Tₚ for protection. The cathode of the transient diode Tₚ for protection is connected to a gate G of the IGBT, and the anode of the protection transient diode is connected to an emitter E of the IGBT. The transient diode Tₚ switches on when the voltage between the gate G and the emitter E of the IGBT is too large, which prevents the IGBT from being damaged by the excessive voltage between the gate G and the emitter E. It should be noted that in the presence of the transient diode Tₚ for protection, the clamp voltage of the discharge resistor array 412 is the sum of the reverse conducting threshold voltages of the transient diodes T_{L1} and T_{L1} and the reverse conducting threshold voltage of the transient diode Tₚ, i.e. U_{TL1} + U_{TL2} + U_{Tp}, in other words, when the voltage exceeds U_{TL1} + U_{TL2} + U_{Tp}, the IGBT switches on and therefore the discharge resistor array 412 switches on.

In the solid-state motor starter according to the present disclosure, the energy absorbing circuit employs a three-phase bridge rectifier circuit on the AC power side and on the motor side, respectively. When the inductive energy of the load or electrical line induces a large inductive electromotive force on the AC power side or on the motor side at the electronic switch of the solid-state motor starter, the large inductive electromotive force can be applied to the transient diode array through the three-phase bridge rectifier circuit on the AC power side or on the motor side, thereby performing energy absorption through the transient diode array. This allows the three electronic switching modules of the solid-state motor starter to share a single transient diode array. This reduces the use of at least two transient diode arrays compared to connecting at least one transient diode array in parallel to each electronic switching module. Since transient diodes are very expensive, the solid-state motor starter can be constructed and produced at a lower cost.

The block diagrams of the circuits, units, devices, apparatus, equipment, and systems involved in this disclosure are intended as exemplary examples only and do not purport to require or imply that they must be connected, arranged, or configured in the manner illustrated in the block diagrams. As will be recognized by those skilled in the art, these circuits, units, devices, apparatus, equipment, and systems may be connected, arranged, or configured in any manner that will achieve the desired purpose. The circuits, units, devices, and apparatuses involved in this disclosure may be implemented in any suitable manner, such as by using a dedicated integrated circuit, field programmable gate array (FPGA), etc., or by using a general purpose processor in combination with a program.

It should be understood by those skilled in the art that the specific embodiments described above are examples only and not limitations, and that various modifications, combinations, partial combinations and substitutions of embodiments of this disclosure may be made based on design requirements and other factors, provided they are within the scope of the appended claims or their equivalents, which are within the scope of the rights to be protected by this disclosure.

## Claims

1. A solid-state motor starter comprising three electronic switching modules, the input of each electronic switching module is configured to connect to one phase of the AC power supply and the output of each electronic switching module is configured to connect to one phase of the stator winding of the motor;
the solid-state motor starter comprises an energy absorbing circuit, the energy absorbing circuit comprises:
- a transient diode array, the transient diode array comprises at least one transient diode branch, each transient diode branch comprises at least one transient diode connected in series in the same direction, the transient diode branches are connected in parallel in the same direction, the transient diode array has a cathode connection end and an anode connection end, and
- a first three-phase bridge rectifier circuit and a second three-phase bridge rectifier circuit, which are composed of rectifier diodes, respectively;
wherein the input of each electronic switching module is connected to the midpoint of one of the bridge arms of the first three-phase bridge rectifier circuit, respectively, and the output of each electronic switching module is connected to the midpoint of one of the bridge arms of the second three-phase bridge rectifier circuit, respectively, and the positive poles of the first and second three-phase bridge rectifier circuit are connected to the cathode connection end of the transient diode array, respectively, and the negative poles of the first and second three-phase bridge rectifier circuit are connected to the anode connection end of the transient diode array.

2. The solid-state motor starter according to claim 1, wherein
the transient diode branches each have the same number of transient diodes.

3. The solid-state motor starter according to claim 2, wherein
the energy absorbing circuit further comprises a discharge resistor array and a switching unit for controlling the on and off of the discharge resistor array, the discharge resistor array being connected in series with the switching unit;
a series circuit consisting of the discharge resistor array and the switching unit connected in parallel with the transient diode array;
wherein the switching unit switches on if the voltage applied to the series circuit exceeds a predetermined threshold voltage in the switching unit.

4. The solid-state motor starter according to claim 3, wherein
the switching unit comprises:
- IGBT.
- a first resistor and a second resistor, and
- a voltage limiting element, which comprises at least one transient diode connected in series in the same direction, the voltage limiting element has a cathode connection end and an anode connection end;
wherein the collector of the IGBT is connected to the first end of the discharge resistor array, the second end of the discharge resistor array is connected to the cathode connection end of the transient diode array, the emitter of the IGBT is connected to the anode connection end of the transient diode array, and
the cathode connection end of the voltage limiting element is connected to the cathode connection end of the transient diode array, the anode connection end of the voltage limiting element is connected to the first end of the first resistor, the second end of the first resistor is connected to the first end of the second resistor, the second end of the second resistor is connected to the anode connection end of the transient diode array, and the second end of the first resistor is connected to the gate of the IGBT.

5. The solid-state motor starter according to claim 4, wherein
the reverse conducting threshold of the voltage limiting element is set to be less than the reverse conducting threshold of the transient diode array.

6. The solid-state motor starter according to claim 4, wherein
the energy absorbing circuit further comprises a transient diode for protection, the cathode of the transient diode for protection is connected to the gate of the IGBT, and the anode of the protection transient diode is connected to the emitter of the IGBT.

7. The solid-state motor starter according to claim 1, wherein
each electronic switching module comprises a first MOSFET and a second MOSFET, the sources of the first and second MOSFETs are connected to each other,
wherein the drain of the first MOSFET is connected to the input of the electronic switching module, and the drain of the second MOSFET is connected to the output of the electronic switching module.

8. The solid-state motor starter according to claim 1, wherein
each electronic switching module comprises a first MOSFET and a second MOSFET, the drains of the first and second MOSFETs are connected to each other,
wherein the source of the first MOSFET is connected to the input of the electronic switching module, and the source of the second MOSFET is connected to the output of the electronic switching module.
